# EUROPÄISCHE PATENTSCHRIFT

(11) **EP 4 295 470 B1**
(45) Veröffentlichungstag und Bekanntmachung des Hinweises auf die Patenterteilung: **29.04.2026**
(21) Anmeldenummer: 22734200.3
(22) Anmeldetag: 01.06.2022
(51) Int. Cl.: H02K 1/278, H02K 1/28

(54) **ROTOR MIT PERMANENTMAGNETEN**
ROTOR WITH PERMANENT MAGNETS
ROTOR À AIMANTS PERMANENTS

(30) Priorität: 30.07.2021 EP 21188807
(43) Veröffentlichungstag der Anmeldung: 27.12.2023
(73) Patentinhaber: Siemens Aktiengesellschaft, 80333 München (DE)
(72) Erfinder: SEUFERT, Reiner, 97616 Salz (DE); VOLLMER, Rolf, 36129 Gersfeld (DE)
(74) Vertreter: Siemens Patent Attorneys
(86) Internationale Anmeldenummer: PCT/EP2022/064917
(87) Internationale Veröffentlichungsnummer: WO 2023/006282

(56) Entgegenhaltungen:
- DE-A1- 2 637 706
- JP-A- 2001 342 502
- JP-A- 2008 251 992
- JP-A- H06 205 554
- JP-A- H09 308 150
- RU-U1- 169 538

## Beschreibung

Die Erfindung betrifft einen Rotor mit Permanentmagneten für eine dynamoelektrische Maschine.

In permanenterregten Synchronmaschinen eingesetzte metallische Magnete werden meist gepresst, gesintert und endbearbeitet, beispielsweise geschliffen bzw. gesägt. Durch diese Herstellungsverfahren wird eine glatte Oberfläche der Permanentmagnete erzeugt. Jedoch beeinflusst die Oberflächenstruktur des Permanentmagneten einen elektrischen Widerstand gegenüber dort im Motorbetrieb entstehenden hochfrequenten Strömen, die einen unerwünschten Einfluss auf die Temperatur und den magnetischen Fluss der Permanentmagnete haben.

Um den ohmschen Widerstand zu erhöhen werden Magnete derzeit auch segmentiert. Dies ist jedoch sehr aufwändig.

Aus der Druckschrift RU 169 538 U1 ist eine Technologie zur Herstellung von Rotoren von Synchronmaschinen mit einer reduzierten Überhitzung bekannt. Der Rotor einer Synchronmaschine mit Permanentmagneten, ausgestattet mit Wellungen, zeichnet sich dadurch aus, dass die Magnete an der dem Luftspalt der Maschine zugewandten Außenfläche mit Wellungen versehen sind, wobei die Tiefe der Wellungen h gleich gewählt wird wie die Wellenbreite b, so dass die Stufe t gleich t = h + b ist. Der Rotor kann mit nichtmagnetischen Bändern zum Halten von Permanentmagneten ausgestattet sein, während die Rotorbänder mit Riffelungen versehen sind, die ähnlich wie bei Magneten ausgeführt sind. Die Kühlfläche der Magnete und Bänder wird nahezu verdoppelt, was deren Überhitzung reduziert, und die Riffelungen erhöhen die Weglänge für Wirbelströme, die beim Betrieb der Maschine entstehen, was die Wärmeentwicklung an Magneten und Band verringert.

Die Druckschrift JP 2008 251992 A offenbart ein Pulverspritzgussverfahren zur Herstellung eines Permanentmagneten mit Gestaltabweichungen von 200 bis 600 µm.

Die Druckschrift JP 2001 342502 A offenbart einen Permanentmagnet für eine dynamoelektrische rotatorische Maschine, aufweisend eine Gestaltabweichung, verursacht durch Rillen an einer Oberfläche des Permanentmagneten, wobei die Gestaltabweichung wenigstens eine Aufdickung und wenigstens eine Vertiefung umfasst, wobei eine Höhendifferenz zwischen einer höchsten Stelle der Aufdickung und einer tiefsten Stelle der Vertiefung wenigstens 2% einer Dicke des Permanentmagneten und höchstens 20% der Dicke des Permanentmagneten beträgt.

Die Druckschrift DE 26 37 706 A1 offenbart einen Permanentmagnet für eine dynamoelektrische rotatorische Maschine, aufweisend eine Gestaltabweichung, die kegelförmig ausgebildet ist. Beim Kleben der Permanentmagnete wird durch die so vergrößerte Oberfläche die Haftfestigkeit erhöht.

Die Druckschrift JP H09 308150 A offenbart einen Rotor einer elektrischen Maschine mit geschlitzten Permanentmagneten, die mit einem Bandagefaden an einer Welle fixiert sind, zur Unterdrückung von Wirbelströmen.

Die Druckschrift JP H06 205554 A offenbart einen geschlitzten Permanentmagnetrotor zur Unterdrückung von Wirbelströmen. Die Breite des Schlitzes, die Tiefe und der Abstand sind in erster Linie durch die Tiefe des Eindringens des Wirbelstroms, abhängig von der Erregungsfrequenz, bestimmt. Im Falle von kleinen Elektromotoren beträgt in der Regel die Breite 0,3 mm oder weniger, die Tiefe 2 mm oder weniger und der Abstand ca. 3mm.

Der Erfindung liegt die Aufgabe zugrunde, einen Rotor für eine dynamoelektrische rotatorische Maschine zu schaffen, wobei Permanentmagnete des Rotors einen erhöhten ohmschen Widerstand aufweisen.

Die Lösung der Aufgabe gelingt durch Anspruch 1, d.h. einen Rotor für eine dynamoelektrische rotatorische Maschine, aufweisend:
- ein Rotorpaket,
- eine Mehrzahl an Permanentmagneten,
- eine Bandage zur Fixierung der Permanentmagnete am Rotorpaket,

wobei die Bandage einen Bandagefaden aufweist,
wobei die Permanentmagnete jeweils eine Gestaltabweichung an einer Oberfläche des Permanentmagneten aufweisen, die zur Aufnahme des Bandagefadens ausgebildet ist,
wobei die Gestaltabweichung wenigstens eine kegelförmige Aufdickung und wenigstens eine Vertiefung umfasst
und wobei eine Höhendifferenz zwischen einer höchsten Stelle der Aufdickung und einer tiefsten Stelle der Vertiefung wenigstens 2% einer Dicke des Permanentmagneten und höchstens 20% der Dicke des Permanentmagneten ist.

Die Erfindung bietet den Vorteil, dass eine derart raue Magnetoberfläche bzw. strukturierte Magnetoberfläche den ohmschen Widerstand gegen hochfrequente Wechselströme erhöht, zudem ist eine verbesserte Entwärmung gegeben.

Durch die beschriebene Aufdickung und die beschriebene Vertiefung wird die Oberfläche des Permanentmagneten vergrößert, was sich positiv auf die Entwärmung auswirkt. Zudem führen Vertiefung und Aufdickung bzw. eine Mehrzahl an Vertiefungen sowie eine Mehrzahl an Aufdickungen zu verstärkten Verwirbelungen der Luft, was sich ebenso positiv auf die Entwärmung auswirkt.

Vorteilhaft ist eine Ausführungsform, wonach die Höhendifferenz wenigstens 5% der Dicke des Permanentmagneten und höchstens 20% der Dicke des Permanentmagneten ist.

Ein typischer Permanentmagnet ist beispielsweise 1,5 mm bis 5 mm dick. Am Beispiel eines 3 mm dicken Permanentmagneten erläutert liegt die Höhendifferenz bei wenigstens 0,06 mm (entspricht hierbei 2%), vorteilhaft bei wenigstens 0,15 mm, und höchstens bei 0,6 mm.

Es sind jedoch auch andere Dicken des Magnets denkbar.

Vorteilhaft ist eine Ausführungsform, wonach die Höhendifferenz wenigstens 10 µm und höchstens 1.000 µm ist.

Vorzugsweise ist die Höhendifferenz wenigstens 10 µm und höchstens 500 µm.

Vorteilhaft ist eine Ausführungsform, wonach die Gestaltabweichung als Welligkeit und/oder in Form von Rillen und/oder in Form von Riefen und/oder in Form von halbkreisförmigen Kanälen ausgebildet ist, eine Kombination der genannten Gestaltabweichungen ist möglich.

Am Beispiel eines Rotors mit außenliegenden Permanentmagneten wird zudem eine Kombination der Gestaltabweichungen erläutert. In diesem Beispiel weist eine Oberfläche des Permanentmagneten, welche in Richtung eines Luftspalts zeigt, die Gestaltabweichung in Form von halbkreisförmigen Kanälen auf.

Die Oberflächen des Permanentmagneten, welche seitlich angeordnet sind, also in Richtung eines benachbarten Permanentmagneten zeigen, können hierbei beispielsweise Riefen aufweisen.

Die Gestaltabweichung umfasst kegelförmige Aufdickungen.

Diese auch Kegelstruktur genannte Gestaltabweichung ist besonders vorteilhaft hinsichtlich einer Stromverdrängung und schafft einen hohen ohmschen Widerstand.

Vorzugsweise sind die kegelförmigen Aufdickungen gleichmäßig über die Oberfläche des Permanentmagneten verteilt.

Vorteilhaft ist zudem eine Ausführung, wonach die Gestaltabweichung eine Rändelung umfasst.

Hierbei eignen sich verschiedene Arten einer Rändelung, beispielsweise Linksrändel, Rechtsrändel, Rändel mit Achsparallelen, Riefen, Rändel mit erhöhten Spitzen, Rändel mit vertieften Spitzen, Kreuzrändel sowohl mit erhöhten als auch vertieften Spitzen, wie auch Kreisrändel. Auch eine Kombination der genannten Rändelarten ist denkbar.

Vorteilhaft ist zudem eine Ausführungsform, wonach eine Breitendifferenz zwischen zwei benachbarten Aufdickungen wenigstens 10 µm und höchstens 300 µm ist.

Vorteilhaft ist eine Ausführungsform, wonach der Permanentmagnet wenigstens eine weitere Gestaltabweichung aufweist, wobei die Höhendifferenz der Gestaltabweichung wenigstens 10 µm und höchstens 100 µm ist, wobei die Höhendifferenz der weiteren Gestaltabweichung wenigstens 300 µm und höchstens 500 µm ist.

Hierbei werden vorteilhaft zwei voneinander verschiedene Gestaltabweichungen auf dem bzw. am Permanentmagneten kombiniert. Beispielsweise kann die zum Luftspalt zeigende Oberfläche die Gestaltabweichung aufweisen und eine seitliche Oberfläche des Permanentmagneten die weitere Gestaltabweichung.

Ferner ist auch denkbar, dass axial betrachtet ein vorderer Bereich der Oberfläche, welche in Richtung des Luftspalts zeigt, die Gestaltabweichung aufweist und ein hinterer Teil die weitere Gestaltabweichung.

Die Gestaltabweichung weist Vertiefungen auf, die so breit und so tief sind, dass der Bandagefaden vorzugsweise gänzlich aufnehmbar ist. Auch eine teilweise Aufnahme ist möglich.

Der Bandagefaden weist beispielsweise wenigstens eine Kohlefaser und/oder wenigstens eine Glasfaser auf.

Hierzu umfasst die Gestaltabweichung vorteilhaft eine Mehrzahl an Rillen, wobei die Rillen wenigstens im Wesentlichen äquidistant angeordnet sind, wobei die Rillen eine Höhendifferenz aufweisen die wenigstens 300 µm und höchstens 500 µm ist, wobei die Rillen eine Breitendifferenz aufweisen, die wenigstens 100 µm ist und höchstens 300 µm ist.

Vorteilhaft hat der Bandagefaden einen Durchmesser von wenigstens 100 µm und höchstens 300 µm. Der Bandagefaden kann so gut in die Rillen gelegt werden.

Dies ist vorteilhaft, da dadurch der Bandagefaden kaum oder sogar gar nicht aus dem Permanentmagneten herausragt.

Dies hat den Vorteil, dass der wirksame magnetische Luftspalt reduziert werden kann. Es wird kein weiterer Platz für die Bandage benötigt.

Die Lösung der Aufgabe gelingt ferner durch eine dynamoelektrische Maschine, insbesondere dynamoelektrische rotatorische Maschine, aufweisend einen Rotor.

Die Lösung der Aufgabe gelingt ferner durch ein Verfahren zur Herstellung eines derartigen Permanentmagneten, wobei der Permanentmagnet mittels Pulverspritzguss hergestellt wird.

Pulverspritzgießen ist auch unter den Begriff "MIM-Verfahren" (englisch für Metal Injection Moulding) bekannt.

Das Pulverspritzgießen weist vorteilhaft folgende, insbesondere aufeinanderfolgende, Prozessschritte auf:
Feedstockproduktion, Spritzgießen, Entbindern und Sintern.

Der so gefertigte Permanentmagnet kann nachbehandelt werden.

Die Feedstockproduktion gelingt vorteilhaft durch Mischung eines Metallpulvers, insbesondere Magnetpulvers, mit einem Kunststoff, vorzugsweise einem thermoplastischen Kunststoff. Die Mischung kann als Feedstock bezeichnet werden.

Der Feedstock kann auch noch andere Stoffe enthalten, beispielsweise Binder bzw. organische Binder.

Eine Erwärmung des Feedstocks ist von Vorteil.

Vorteilhaft anschließend erfolgt das Spritzen des Feedstocks zum Erhalt des Permanentmagneten.

Der Permanentmagnet wird vorteilhaft bei der Formung einer Anisotropie ausgesetzt zum Erhalt eines anisotropen Permanentmagneten. Beim Spritzen wird vorteilhaft kurzzeitig ein Magnetfeld angelegt.

Vorteilhaft anschließend erfolgt eine Abmagnetisierung.

Im Folgenden wird die Erfindung anhand der in den Figuren dargestellten Ausführungsbeispiele näher beschrieben und erläutert. Es zeigen:
- FIG 1: einen Rotor,
- FIG 2: eine weitere Ausführungsform des Rotors,
- FIG 3: eine Gestaltabweichung,
- FIG 4: eine weitere Ausführungsform der Gestaltabweichung,
- FIG 5: eine dynamoelektrische Maschine,
- FIG 6: eine weitere Ausführungsform der Permanentmagnete,
- FIG 7: ein Verfahren zur Herstellung des Permanentmagneten.

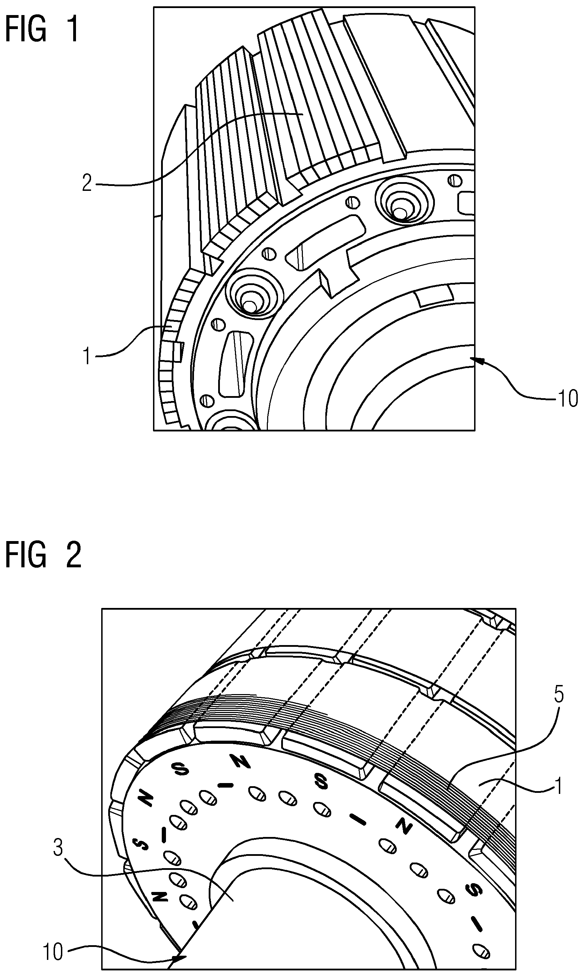

FIG 1 zeigt einen Rotor 10. Der Rotor 10 weist in der Figur eine Mehrzahl an außenliegenden Permanentmagneten auf.

Die Permanentmagnete 1 weisen eine Gestaltabweichung 2 auf.

FIG 2 zeigt eine weitere Ausführungsform des Rotors 10.

Der Rotor 10 weist eine Mehrzahl an außenliegenden Permanentmagneten 1 auf, die zur Fixierung am Rotorpaket bandagiert sind. Hierzu wurde in der Figur ein Bandagefaden 5 im Uhrzeigersinn um Permanentmagnete 1 und Rotor 10 gewickelt.

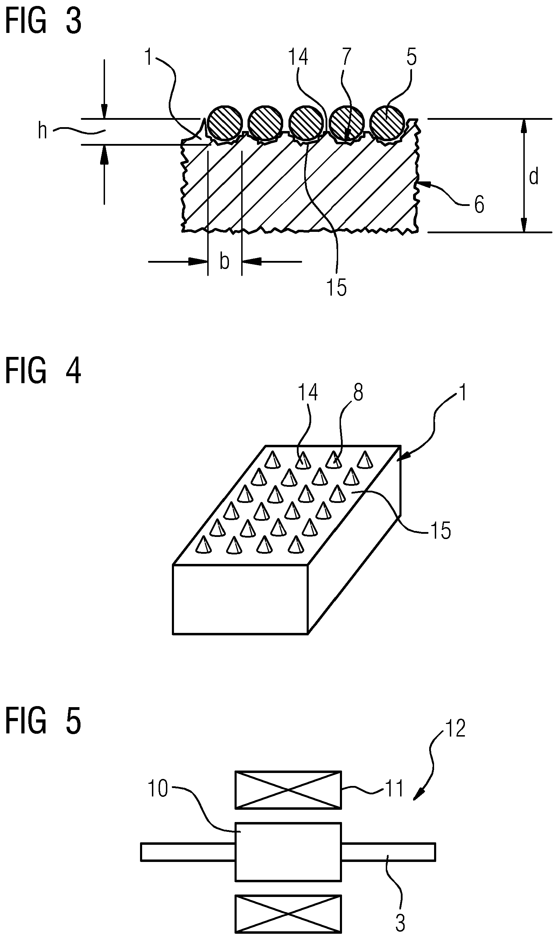

Der Bandagefaden 5 liegt hierbei, wie in FIG 3 gezeigt, vorteilhaft in halbkreisförmigen Vertiefungen 7.

Der in FIG 3 gezeigte Permanentmagnet 1 weist eine Gestaltabweichung auf, welche an einer in Richtung des Luftspalts zeigenden Oberfläche ausgebildet ist und in Form von halbkreisförmigen Vertiefungen ausgebildet ist.

Die Vertiefungen sind derart ausgebildet, dass der Bandagefaden 5 aufnehmbar ist.

Es gibt hierbei mehrere Möglichkeiten. Die Vertiefungen 7 können so tief sein, dass der Bandagefaden mit einer Fläche, welche in Richtung des Luftspalts zeigt, bündig mit der Aufdickung 14 abschließt.

Jedoch ist auch, wie in dieser Figur gezeigt, nur eine teilweise Aufnahme des Bandagefadens durch die halbkreisförmige Vertiefung 7 denkbar.

Der Permanentmagnet 1 weist zudem eine weitere Gestaltabweichung 2 an seiner Unterseite sowie an den beiden Seitenflächen auf. Diese Gestaltabweichung 2 ist in der Figur als Rauigkeit ausgebildet.

Die Figur zeigt zudem eine Dicke d des Permanentmagneten 1, eine Höhe h der Aufdickung 14 sowie eine Breite b der Vertiefung 15.

FIG 4 zeigt eine weitere Ausführungsform der Gestaltabweichung 2.

Hierbei weist die Oberfläche des Permanentmagneten 1 eine Mehrzahl an kegelförmigen Aufdickungen 8 auf.

Kegelförmige Aufdickungen 8 sind vorteilhaft für die Oberfläche bzw. Struktur für eine Bandage und zudem stellen sie eine einfach zu bildende Ausformung in einem Spritzgusswerkzeug dar.

FIG 5 zeigt die dynamoelektrische Maschine 12, aufweisend einen Stator 11, eine Welle 3 sowie den Rotor 10.

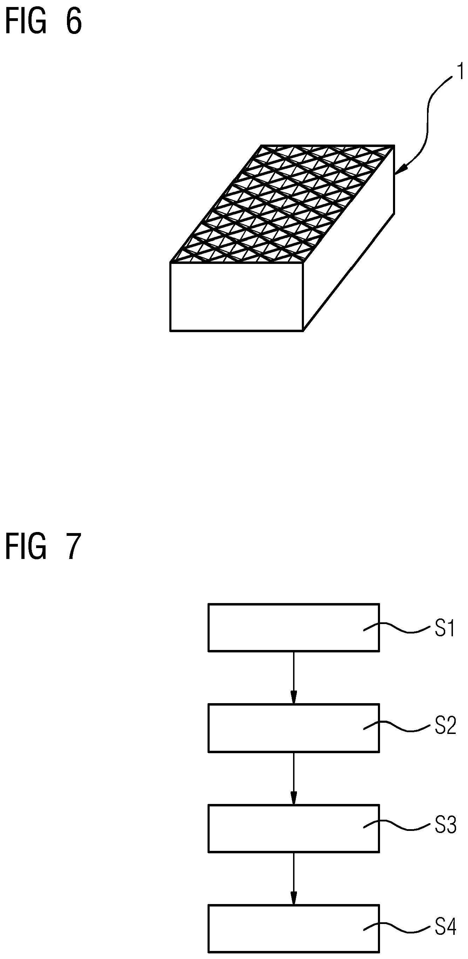

FIG 6 zeigt eine weitere Ausführungsform des Permanentmagneten 1.

Dieser weist in der Figur eine Rändelung 16 auf. Auch die Rändelung 16 ist eine Form der Gestaltabweichung 2.

Die Erfindung bietet viele Vorteile. Durch die reduzierten Ströme in den Permanentmagneten 1 erwärmen sich die Permanentmagnete 1 weniger. Somit können auch preiswertere Magnetmaterialien eingesetzt werden.

Zudem wird die Leistungs- und Drehmomentdichte der Motoren erhöht. Die Ströme werden vorteilhaft durch den Skineffekt reduziert.

Durch die Vergrößerung der Oberfläche der Permanentmagnete 1 ist zudem eine verbesserte Entwärmung gegeben, welche zu kälteren Magneten führt. Auch dies wirkt sich positiv hinsichtlich Kosten und Motorperformance aus.

Die gezielte Oberflächenstruktur zur Aufnahme des Bandagefadens führt zu einem geringeren magnetisch wirksamen Luftspalt und somit zu höheren magnetischen Induktionen, was mit einer erhöhten Leistungs- und Drehmomentdichte einhergeht.

Zudem kann durch das eingesetzte Fertigungsverfahren mittels Pulverspritzguss ein hoher Freiheitsgrad hinsichtlich Gestaltabweichungen erreicht werden. Die Permanentmagnete 1 können flexibel gestaltet werden.

FIG 7 zeigt ein Verfahren zur Herstellung des Permanentmagneten 1.

Das Pulverspritzgießen weist vorteilhaft folgende, insbesondere aufeinanderfolgende, Prozessschritte auf:
In einem Verfahrensschritt S1 erfolgt eine Feedstockproduktion.

Die Feedstockproduktion gelingt vorteilhaft durch Mischung eines Metallpulvers, insbesondere Magnetpulvers, mit einem Kunststoff, vorzugsweise einem thermoplastischen Kunststoff. Die Mischung kann als Feedstock bezeichnet werden.

Der Feedstock kann auch noch andere Stoffe enthalten, beispielsweise Binder bzw. organische Binder.

Eine Erwärmung des Feedstocks ist von Vorteil.

In einem Verfahrensschritt S2 erfolgt ein Spritzgießen.

In S2 erfolgt das Spritzen des Feedstocks zum Erhalt des Permanentmagneten.

Der Permanentmagnet wird vorteilhaft bei der Formung einem gerichteten Magnetfeld ausgesetzt zum Erhalt eines anisotropen Permanentmagneten. Beim Spritzen wird vorzugsweise kurzzeitig ein Magnetfeld angelegt.

In einem Verfahrensschritt S3 erfolgt ein Entbindern, also ein Austreiben von Bindemittel.

Das Entbindern erfolgt vorzugsweise bei einer Temperatur von 200°C bis 400°C.

In einem Verfahrensschritt S4 erfolgt ein Sintern.

Das Sintern erfolgt vorzugsweise bei einer Temperatur von 900°C bis 1100°C.

So wird der Permanentmagnet 1 gut verfestigt.

## Patentansprüche

1. Rotor (10) für eine dynamoelektrische rotatorische Maschine (12), aufweisend:
- ein Rotorpaket,
- eine Mehrzahl an Permanentmagneten (1),
- eine Bandage zur Fixierung der Permanentmagnete (1) am Rotorpaket,
wobei die Bandage einen Bandagefaden (5) aufweist,
wobei die Permanentmagnete (1) jeweils eine Gestaltabweichung (2, 6, 7) an einer Oberfläche des Permanentmagneten (1) aufweisen, die zur Aufnahme des Bandagefadens ausgebildet ist,
**gekennzeichnet dadurch, dass**
die Gestaltabweichung (2, 6, 7) wenigstens eine kegelförmige Aufdickung (8, 14) und wenigstens eine Vertiefung (15) umfasst
und dass eine Höhendifferenz (h) zwischen einer höchsten Stelle der Aufdickung (14) und einer tiefsten Stelle der Vertiefung (15) wenigstens 2% einer Dicke (d) des Permanentmagneten (1) und höchstens 20% der Dicke (d) des Permanentmagneten (1) ist.

2. Rotor nach Anspruch 1, wobei die Höhendifferenz (h) wenigstens 5% der Dicke (d) des Permanentmagneten (1) und höchstens 20% der Dicke (d) des Permanentmagneten (1) ist.

3. Rotor nach einem der vorhergehenden Ansprüche, wobei die Höhendifferenz (h) wenigstens 10 µm und höchstens 1000 µm ist.

4. Rotor nach einem der vorhergehenden Ansprüche, wobei die Höhendifferenz (h) wenigstens 10 µm und höchstens 500 µm ist.

5. Rotor nach einem der vorhergehenden Ansprüche, wobei die Gestaltabweichung eine Welligkeit und/oder Rillen und/oder Riefen und/oder halbkreisförmige Kanäle umfasst.

6. Rotor nach einem der vorhergehenden Ansprüche, wobei die Gestaltabweichung eine Rändelung umfasst.

7. Rotor nach einem der vorhergehenden Ansprüche, wobei eine Breitendifferenz zwischen zwei benachbarten Aufdickungen wenigstens 10 µm und höchstens 300 µm ist.

8. Rotor nach einem der vorhergehenden Ansprüche, wobei die Gestaltabweichung eine Mehrzahl an Rillen umfasst, wobei die Rillen wenigstens im Wesentlichen äquidistant angeordnet sind, wobei die Rillen eine Höhendifferenz aufweisen, die wenigstens 300 µm und höchstens 500 µm ist, wobei die Rillen eine Breitendifferenz aufweisen, die wenigstens 100 µm und höchstens 300 µm ist.

9. Dynamoelektrische Maschine, insbesondere dynamoelektrische rotatorische Maschine, aufweisend einen Rotor nach einem der Ansprüche 1 bis 8.

10. Verfahren zur Herstellung eines Rotors (10) nach einem der Ansprüche 1 bis 8, wobei der Permanentmagnet mittels Pulverspritzguss hergestellt wird.

## Claims

1. Rotor (10) for a dynamoelectric rotary machine (12), having:
- a rotor stack,
- a plurality of permanent magnets (1),
- a binding for fixing the permanent magnets (1) to the rotor stack,
wherein the binding has a binding thread (5),
wherein the permanent magnets (1) each have a shape deviation (2, 6, 7) at a surface of the permanent magnet (1), which is embodied for receiving the binding thread,
**characterised in that** the shape deviation (2, 6, 7) comprises at least one conical thickening (8, 14) and at least one indentation (15)
and a height difference (h) between a highest point of the thickening (14) and a lowest point of the indentation (15) is at least 2% of a thickness (d) of the permanent magnet (1) and at most 20% of the thickness (d) of the permanent magnet (1).

2. Rotor according to claim 1, wherein the height difference (h) is at least 5% of the thickness (d) of the permanent magnet (1) and at most 20% of the thickness (d) of the permanent magnet (1).

3. Rotor according to one of the preceding claims, wherein the height difference (h) is at least 10 µm and at most 1,000 µm.

4. Rotor according to one of the preceding claims, wherein the height difference (h) is at least 10 µm and at most 500 µm.

5. Rotor according to one of the preceding claims, wherein the shape deviation comprises a waviness and/or grooves and/or furrows and/or semi-circular channels.

6. Rotor according to one of the preceding claims, wherein the shape deviation comprises a knurling.

7. Rotor according to one of the preceding claims, wherein a difference in width between two adjacent thickenings is at least 10 µm and at most 300 µm.

8. Rotor according to one of the preceding claims, wherein the shape deviation comprises a plurality of grooves, wherein the grooves are arranged at least substantially equidistantly, wherein the grooves have a height difference, which is at least 300 µm and at most 500 µm, wherein the grooves have a difference in width, which is at least 100 µm and at most 300 µm.

9. Dynamoelectric machine, in particular dynamoelectric rotary machine, having a rotor according to one of claims 1 to 8.

10. Method for producing a rotor (10) according to one of claims 1 to 8, wherein the permanent magnet is produced by means of powder injection moulding.

## Revendications

1. Rotor (10) pour une machine (12) dynamoélectrique tournante, comportant :
- un paquet rotorique,
- une pluralité d'aimants (1) permanents,
- un bandage de fixation des aimants (1) permanents au paquet rotorique,
dans lequel le bandage a un fil (5) de bandage,
dans lequel les aimants (1) permanents ont chacun un écart (2, 6, 7) de conformation à une surface des aimants (1) permanents, qui est constitué pour la réception du fil de bandage,
**caractérisé en ce que**
l'écart (2, 6, 7) de conformation comprend au moins un épaississement (8, 14) de forme conique et au moins une cavité (15),
et **en ce qu'**une différence (h) de niveau, entre un point de le plus haut de l'épaississement (14) et un point le plus bas de la cavité (15), représente au moins 2 % d'une épaisseur (d) de l'aimant (1) permanent et au plus 20 % de l'épaisseur (d) de l'aimant (1) permanent.

2. Rotor suivant la revendication 1, dans lequel la différence (h) de niveau représente au moins 5 % de l'épaisseur (d) de l'aimant (1) permanent et au plus 20 % de l'épaisseur (d) de l'aimant (1) permanent.

3. Rotor suivant l'une des revendications précédentes, dans lequel la différence (h) de niveau est d'au moins 10 µm et d'au plus 1000 µm.

4. Rotor suivant l'une des revendications précédentes, dans lequel la différence (h) de niveau est d'au moins 10 µm et d'au plus 500 µm.

5. Rotor suivant l'une des revendications précédentes, dans lequel l'écart de conformation comprend une ondulation et/ou des rainures et/ou des rayures et/ou des canaux hémicirculaires.

6. Rotor suivant l'une des revendications précédentes, dans lequel l'écart de conformation comprend un moletage.

7. Rotor suivant l'une des revendications précédentes, dans lequel une différence de largeur entre deux épaississements voisins est d'au moins 10 µm et d'au plus 300 µm.

8. Rotor suivant l'une des revendications précédentes, dans lequel l'écart de conformation comprend une pluralité de nervures, dans lequel les nervures sont disposées au moins sensiblement de manière équidistante, dans lequel les rainures ont une différence de niveau, qui est d'au moins 300 µm et d'au plus 500 µm, dans lequel les rainures ont une différence de largeur, qui est d'au moins 100 µm et d'au plus 300 µm.

9. Machine dynamo-électrique, en particulier machine dynamo-électrique tournante, comportant un rotor suivant l'une des revendications 1 à 8.

10. Procédé de fabrication d'un rotor (10) suivant l'une des revendications 1 à 8, dans lequel on fabrique les aimants permanents au moyen d'un moulage par injection de poudre.
